# EUROPEAN PATENT SPECIFICATION

(11) **EP 4 110 529 B1**
(45) Date of publication and mention of the grant of the patent: **18.10.2023**
(21) Application number: 21707386.5
(22) Date of filing: 23.02.2021
(51) Int. Cl.: B04C 5/04, B04C 9/00

(54) **METHOD FOR WASTEWATER TREATMENT IN MICROGRAVITY**
VERFAHREN ZUR ABWASSERBEHANDLUNG IN DER MIKROGRAVITATION
MÉTHODE POUR TRAITEMENT DES EAUX USÉES EN MICROGRAVITÉ

(30) Priority: 24.02.2020 IT 202000003775
(43) Date of publication of application: 04.01.2023
(73) Proprietor: Thales Alenia Space Italia S.p.A. Con Unico Socio, 00131 Roma (IT); P.I.Eco S.r.l. Processi Impianti Ecologici, 24030 Terno d'Isola (BG) (IT)
(72) Inventor: BOSCHERI, Giorgio, 10146 Torino (IT); LOCANTORE, Ilaria, 10146 Torino (IT); MEDOLAGO ALBANI, Giovanni Andrea, 24030 Terno d'Isola (BG) (IT); MEDOLAGO ALBANI, Alessandro, 24030 Terno d'Isola (BG) (IT); MEDOLAGO ALBANI, Pietro, 24030 Terno d'Isola (BG) (IT); MEDOLAGO ALBANI, Federico Alessandro, 24030 Terno d'Isola (BG) (IT)
(74) Representative: Studio Torta S.p.A.
(86) International application number: PCT/IB2021/051515
(87) International publication number: WO 2021/171175

(56) References cited:
- WO-A1-2019/113678
- WO-A2-2007/144631
- DE-A1- 10 309 575

## Description

### Cross-Reference to Correlated Patent Applications

The present application claims priority from the Italian patent application No 102020000003775 filed on 24.02.2020.

### Technical Field of the Invention

The present invention relates to a method of operating a passive cyclone separator to treat a fluid in a microgravity environment, in particular to separate a gas phase of a wastewater fluid from a liquid phase of the wastewater fluid in a microgravity environment.

### State of the Art

Wastewater treatment apparatuses are known for both ground and space applications, which comprise a cyclone separator for separating a gas phase of a wastewater fluid from a liquid phase of the wastewater fluid.

Typically, such cyclone separators comprise:
- a tubular body, normally cylindrical, rotatable about its longitudinal axis and internally defining a separation chamber within which the gas-liquid phase separation occurs;
- an inlet opening, through which wastewater (usually pre-treated) is fed to the separation chamber;
- a liquid phase outlet opening, through which the liquid phase separated from the gas phase exits the separation chamber;
- a gas phase outlet opening, through which the gas phase separated from the liquid phase exits the separation chamber; and
- an actuation device, generally a motor coupled coaxially to the tubular body and configured to control a rotation of the tubular body about its longitudinal axis.

The wastewater fed into the cyclone separator can already be a two-phase fluid; alternatively, the wastewater is a mono-phase fluid before entering the cyclone separator, whereby the physical conditions for the two phases to be obtained are provided inside the separation chamber.

The cyclone separator of the above-mentioned type defines a rotating motorized centrifuge, in which liquid phase and gas phase are separated due to high centrifugal acceleration of the two-phase wastewater. Such centrifugal acceleration is therefore driven by the motor and determines the establishment of a cyclonic vortex within the separation chamber. The cyclonic vortex causes the liquid phase and the gas phase to separate from one another, according to a manner known and not described in detail.

WO-A-2007144631 and DE-A-10309575 disclose cyclone separators of the type described above, which exploit the inlet of waste water to establish the cyclonic vortex.

WO-A-2019113678 discloses an apparatus for the extraction of compounds from botanical material using a condensable gaseous solvent and including an extraction chamber and a cyclone separator.

Although functionally valid, the cyclone separators of the above-mentioned type are still open to further improvement, especially as to properly adapt them for space applications and microgravity environments.

In fact, the known cyclone separators comprise a large number of moving parts and components, which often require maintenance and which affect the overall reliability of the system.

Moreover, the motor for driving the centrifugal acceleration of the tubular body represents the highest energy-consuming device of the system. The aspect of energy saving is of the uttermost importance, especially for space applications.

### Object and Summary of the Invention

It is an object of the present invention to provide a method of operating a passive cyclone separator to treat wastewater in a microgravity environment which is designed to overcome at least one of the above-mentioned drawbacks in a straightforward and low-cost manner.

This object is achieved by the present invention, which provides a method of operating a passive cyclone separator as claimed in the appended claims.

### Brief Description of the Drawings

Figure 1 shows a schematic view, with parts removed for clarity, of a wastewater treatment apparatus comprising a cyclone separator
Figure 2a is a larger-scale lateral view, with parts removed for clarity, of the cyclone separator of Figure 1;
Figure 2b is a larger-scale, partially sectioned lateral view, with parts removed for clarity, of the cyclone separator of Figure 1;
Figure 3 is a larger scale perspective view of the cyclone separator of Figure 1;
Figure 3a shows a detail of Figure 3 in a larger scale and with parts removed for clarity; and
Figure 3b shows, in a larger scale and with parts removed for clarity, a section along the line IIIB-IIIB of Figure 3a.

### Detailed description of preferred embodiments

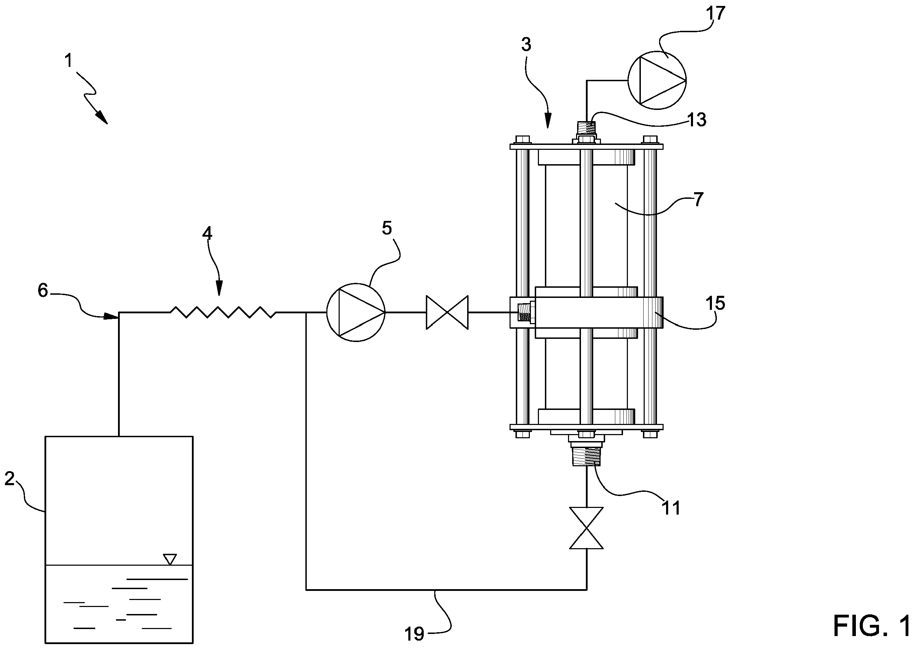

With reference to Figure 1, number 1 indicates as a whole a wastewater treatment apparatus configured to treat wastewater in a microgravity environment, such as an orbital space environment (low earth orbit, medium earth orbit, high earth orbit, or other celestial body orbit) or a non-orbital space environment.

Apparatus 1 comprises:
- a collection tank 2, in which the wastewater to be treated is collectable;
- a cyclone separator 3 fluidly connected to tank 2 and arranged downstream of tank 2;
- a heater device 4, preferably an electric resistance heater or a magnetic-inductive heater, arranged downstream of tank 2 and upstream of cyclone separator 3 and configured to heat the wastewater up to a predetermined treatment temperature; and
- a first pump 5, preferably operatively interposed between heater device 4 and cyclone separator 3, and configured to feed the wastewater through heater device 4 and towards and into cyclone separator 3.

Opportunely, all the components of apparatus 1 are fluidly connected by a suitable fluid line 6 comprising a plurality of ducts, so as to define a fluid circuit.

According to this non-limiting preferred embodiment, the wastewater may defined by wastewater collected, in use, from any sanitary appliance that may be present in a manned habitat configured to operate in a microgravity environment.

For example, wastewater may be defined by grey wastewater, such as a solution of water and soap or a solution of water and any detergent, by yellow water, such as urine with or without flush water, or a mix of grey and yellow waters.

As shown in the enclosed figures, cyclone separator 3 comprises:
- a tubular body 7 having a longitudinal axis A and internally defining a separation chamber 8 within which a gas phase of the wastewater is separable, in use, from a liquid phase of the wastewater, due to predetermined temperature and pressure conditions provided therein and due to high centrifugal acceleration of the wastewater imparted in a manner described in the following;
- an inlet opening 10 through which the wastewater, previously heated by heater device 4, is injectable into separation chamber 8 along an injection axis B, due to the action of first pump 5;
- a liquid phase outlet opening 11 arranged at a first axial end portion 12 of tubular body 7 and through which the liquid phase separated from the gas phase exits, in use, separation chamber 8; and
- a gas phase outlet opening 13 arranged at a second axial end portion 14 of tubular body 7, opposite to first end portion 12, and through which the gas phase separated from the liquid phase exits, in use, separation chamber 8.

In order to cause the gas phase to exit separation chamber 8, apparatus 1 further comprises a second pump 17 arranged downstream of gas opening 13 and configured to suction the gas phase separated from the liquid phase through gas opening 13.

Furthermore, second pump 17 is configured to depressurize separation chamber 8 up to a predetermined treatment pressure, preferably below atmospheric pressure.

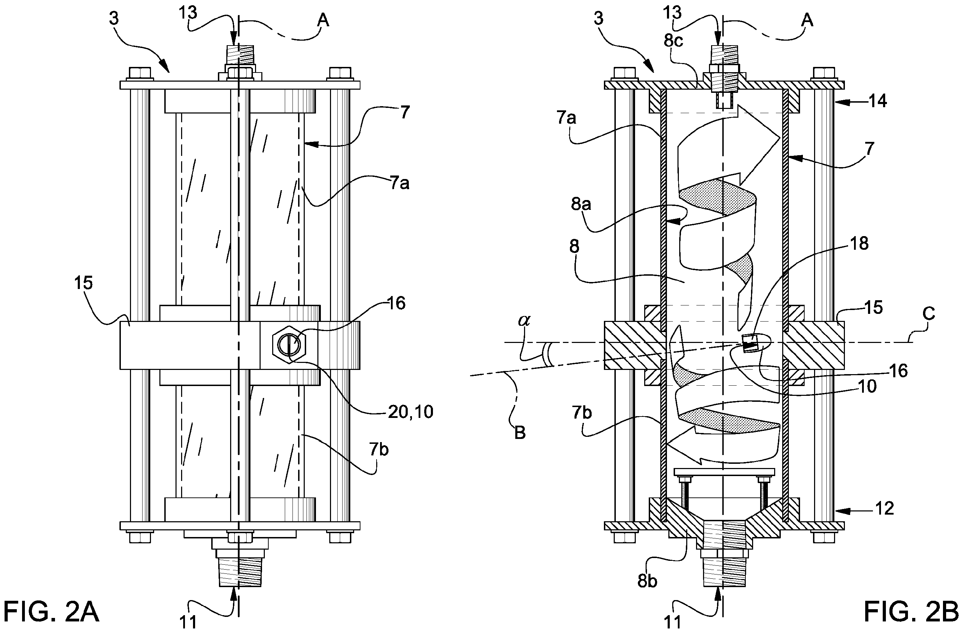

As visible in Figure 2b, tubular body 7 is defined by a first tubular section 7a and a second tubular section 7b which are joined together coaxially by means of an annular injection disk 15 axially interposed between liquid opening 11 and gas opening 13.

Moreover, each one of the gas opening 13 and liquid opening 11 and defines one axial opening of the relative first tubular section 7a and second tubular section 7b, respectively.

In light of the above, tubular body 7 is defined by the joining of first and second tubular sections 7a, 7b and injection disk 15.

Hence, separation chamber 8 is laterally delimited by an internal wall 8a defined by the joining of the internal walls of first and second tubular sections 7a, 7b and of injection disk 15.

Furthermore, separation chamber 8 is axially delimited by a first axial wall 8b arranged at first end portion 12, and by a second axial wall 8c arranged at second end portion 14.

First axial wall 8b and second axial wall 8c axially close tubular body 7.

Liquid opening 11 is coaxially obtained in first axial wall 8b and gas opening 13 is coaxially obtained in second axial wall 8c.

According to the preferred embodiment shown, both first and second tubular sections 7a, 7b are substantially cylindrical. Therefore, tubular body 7 has a substantially cylindrical shape around axis A.

It is stated that the term "substantially" is used herein to take into account the geometric tolerance ranges which usually characterize the described components.

Inlet opening 10 is arranged at injection disk 15 and is axially interposed between liquid opening 11 and gas opening 13.

In particular, inlet opening 10, and therefore injection disk 15, is arranged closer to liquid opening 11 than to gas opening 13.

Hence, second tubular section 7b, at which liquid opening 11 is located, has a smaller axial extension than first tubular section 7a, at which gas opening 13 is located.

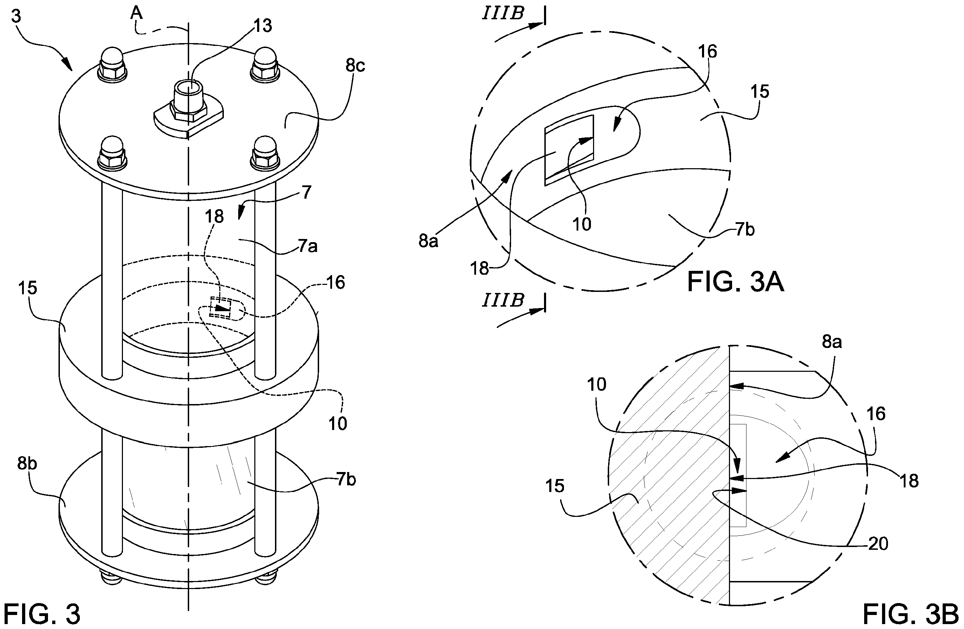

According to the preferred embodiment shown, cyclone separator 3 comprises an injection nozzle 16 (only partially visible in Figures 2a, 2b, 3, 3a and 3b) adapted to be coupled to injection disk 15 to partially engage a shaped slot of the injection disk 15 itself and defining, in particular carrying, inlet opening 10.

In other words, inlet opening 10 is obtained in injection nozzle 16.

Moreover, injection nozzle 16 is inserted in the aforementioned shaped slot so that a terminal portion thereof is flush with internal wall 8a.

In use, the combined effect of the wastewater temperature, obtained by means of heater device 4, and the depressurization inside separation chamber 8, biased by second pump 17, causes a partial change of phase of the wastewater entering therein.

More specifically, a part of the wastewater undergoes a change of state, from liquid phase to gas phase.

According to an aspect of the present invention, injection axis B is inclined towards liquid opening 11 so as to define a non-zero injection angle α with a direction C orthogonal to axis A (Figure 2b).

Due to the inclination of injection axis B and given the fact that apparatus 1 operates in a microgravity environment, the injected wastewater, and particularly the liquid phase of the wastewater, is forced to flow towards liquid opening 11, while the gas phase is suctioned in the opposite direction towards gas opening 13, by means of second pump 17.

Moreover, injection nozzle 16 comprises a guiding wall 18 (Figures 3, 3a, 3b) positioned downstream of inlet opening 10 and arranged substantially tangent, in particular tangent, to internal wall 8a, so as to feed the wastewater tangentially to internal wall 8a, with a specific inlet flow rate.

In light of the above, a phase separation between the liquid phase and the gas phase of the wastewater occurs within separation chamber 8, whereby the liquid phase is forced to flow along and tangentially to internal wall 8a and towards liquid opening 11, thereby establishing a cyclonic vortex along tubular section 7b.

The phase separation is driven by the flow rate, in particular is driven uniquely by the flow rate, since no active actuation devices are present, such as motors, and is achieved thanks to the specific temperature and pressure conditions within separation chamber 8.

In practice, the high centrifugal acceleration imparted to the wastewater entering separation chamber 8 by its own peculiar flowrate and by the above-mentioned injection conditions determines the establishment of a cyclonic vortex within separation chamber 8. Then, the pressure and temperature conditions allow a so-called "air stripping" of the injected fluid, whereby the gas phase is separated from the liquid phase.

In light of the above, a passive phase separation is obtained, i.e. a phase separation without the need for an external actuation device.

In other words, cyclone separator 3 defines a so-called passive cyclone separator.

Once extracted through the respective gas opening 13 or liquid opening 11, the separated gas phase and liquid phase can be further treated. For example, gas phase may be directed, by means of second pump 17, to a condensation device, so as to obtain water with significantly lower contaminants concentration with respect to the wastewater entering the separation chamber 8.

Preferably, injection angle α is greater than 0° and less than or equal to 45°, more preferably is greater than 0° and less than or equal to 25°, even more preferably is 5°.

Conveniently, an inlet flow rate of the wastewater through inlet opening 10 ranges from 74 l/h to 444 l/h, preferably from 200 l/h to 350 l/h.

Moreover, in use, an inlet flow rate, measured in l/h, to axial distance between inlet opening 10 and gas opening 13, measured in mm, ratio is between 0.7 and 4.4, preferably between 2 and 3.5.

Furthermore, in use, an inlet flow rate, measured in l/h, to axial distance between inlet opening 10 and liquid opening 11, measured in mm, ratio is between 0.5 and 3, preferably between 1.3 and 2.3.

In addition, in use, an inlet flow rate, measured in l/h, to tubular body 7 diameter, in particular an inner diameter of internal wall 8a, measured in mm, ratio is between 1 and 6, preferably between 2.7 and 4.7.

The applicant has observed that the aforementioned ranges represent the optimal constructive parameters to obtain an optimal phase separation with the minimum loss of energy.

Since guiding wall 18 is arranged tangent to internal wall 8a, injection axis B is substantially tangent, in particular tangent, to internal wall 8a.

With reference to Figure 3a and 3b, guiding wall 18 is arranged tangent to internal wall 8 in a way such that an end of guiding wall 18 distal from inlet opening 10 is flush with internal wall 8a.

According to another aspect of the present invention, inlet opening has a substantially rectangular cross-section.

In particular, inlet opening 10 is arranged so that the longer side of the rectangular cross-section is substantially tangent to guiding wall 18, in particular the longer side lies onto guiding wall 18 (Figure 3b).

Thanks to the peculiar configuration of inlet opening 10, it is possible to laminate the incoming fluid onto internal wall 8a. This results in a more stable vortex within separation chamber 8, even at low flow rates (within the above-specified ranges).

Conveniently, injection nozzle 16 internally defines a fluid passage 20, or a duct, having a substantially rectangular cross-section which is constant along the length thereof.

In practice, the cross-section of inlet opening 10 is corresponding to the cross-section of passage 20.

Preferably, a longer side to shorter side ratio is between 5 and 10, preferably is 6.

Preferably, as visible in Figure 1, apparatus 1 further comprises a recirculation duct 19 to selectively recirculate, under the action of first pump 5, the liquid phase exiting separation chamber 8 through liquid opening 11.

In this way, liquid phase can be advantageously re-treated multiple times.

Operation of apparatus 1 and cyclone separator 3 according to the invention is described hereinafter starting from a condition in which:
- first pump 5 suctions wastewater from tank 2 and feeds it through heater device 4, which heats wastewater at the predetermined temperature, and, finally, into separation chamber 8 through inlet opening 10; and
- second pump 17 has depressurized separation chamber 8 at the predetermined pressure value.

In this condition, the wastewater entering cyclone separator 3 undergoes a partial change of state. In other words, some more volatile components (in particular those with a boiling point lower than that of water) undergo a change of state and become gas phase, due to the above temperature and pressure conditions within separation chamber 8.

Due to the sustained flow rate and due to the construction parameters defined above, a cyclonic vortex is established, whereby the liquid phase and the gas phase are separated.

The liquid phase is directed towards liquid opening 11 due to the injection angle α, it is extracted through liquid opening 11 and, preferably, re-circulated by means of duct 19.

The gas phase is suctioned by second pump 17 and directed to further treatment units, such as a condensation unit.

The advantages of cyclone separator 3 according to the present invention will be clear from the foregoing description.

In particular, a passive cyclone separator 3 which is properly adapted to operate in a microgravity environment is provided, with which a passive gas-liquid phase separation can be obtained without the need of moving parts, but merely with appropriate flow rate, temperature and pressure conditions, as well as with appropriate construction parameters.

The overall reliability of the system is thereby enhanced, and the energy consumption, crucial for the space applications, is reduced.

Clearly, changes may be made to cyclone separator 3 as described herein without, however, departing from the scope of protection as defined in the accompanying claims.

## Claims

1. Method of operating a passive cyclone separator (3) to treat a fluid in a microgravity environment to separate a liquid phase of the fluid from a gas phase of the fluid, the cyclone separator (3) comprising:
- a tubular body (7) having a longitudinal axis (A) and internally defining a separation chamber (8) within which the gas phase of said fluid is separable from the liquid phase of said fluid;
- an inlet opening (10) through which the fluid is injectable into the separation chamber (8) along an injection axis (B);
- a liquid phase outlet opening (11), through which the liquid phase separated from the gas phase exits, in use, the separation chamber (8); and
- a gas phase outlet opening (13), through which the gas phase separated from the liquid phase exits the separation chamber (8);
wherein the injection axis (B) is inclined towards the liquid phase outlet opening (11) so as to define a non-zero fluid injection angle (α) with a direction (C) orthogonal to said longitudinal axis (A);
wherein the liquid phase outlet opening (11) is arranged at a first axial end portion (12) of the tubular body (7) and wherein the gas phase outlet opening (13) is arranged at a second axial end portion (14) of the tubular body (7) opposite to the first axial end portion (12);
wherein the inlet opening (10) is axially interposed between the liquid phase outlet opening (11) and the gas phase outlet opening (13);
the method comprising the step of:
- feeding the fluid through the inlet opening (10) into the separation chamber with a determined fluid inlet flow rate;
and wherein a fluid inlet flow rate, measured in l/h, to axial distance between the inlet opening (10) and the liquid phase outlet opening (11), measured in mm, ratio is between 0.5 and 3, preferably between 1.3 and 2.3; and/or
wherein a fluid inlet flow rate, measured in 1/h, to axial distance between the inlet opening (10) and the gas phase outlet opening (13), measured in mm, ratio is between 0.7 and 4.4, preferably between 2 and 3.5.

2. Method as claimed in claim 1, wherein the fluid injection angle (α) is greater than 0° and less than or equal to 45°, preferably is greater than 0° and less than or equal to 25°, more preferably is 5°.

3. Method as claimed in claim 1 or 2, wherein the cyclone separator comprises an injection nozzle (16) defining said inlet opening (10);
the injection nozzle (16) comprises a guiding wall (18) arranged downstream of the inlet opening (10) and arranged substantially tangent to an internal wall (8a) of the separation chamber (8);
wherein the step of feeding the fluid is carried out by feeding the fluid tangentially to said internal wall (8a).

4. Method as claimed in claim 3, wherein the inlet opening (10) has a substantially rectangular cross-section; wherein said injection nozzle (16) internally defines a fluid passage (20) having a substantially rectangular cross-section constant along the length thereof; and wherein a longer side of the rectangular cross-section to shorter side of the rectangular cross-section ratio is between 5 and 10, preferably is 6.

5. Method as claimed in any one of the foregoing claims, wherein the tubular body (7) has a substantially cylindrical shape, and wherein the inlet opening cross-section is designed such that, during said step of feeding the fluid, a ratio between the fluid inlet flow rate through the inlet opening, measured in 1/h, and a tubular body diameter, measured in mm, is between 1 and 6, preferably between 2.7 and 4.7.

6. Method as claimed in any one of the foregoing claims, wherein the inlet opening cross-section is designed such that, during said step of feeding the fluid, the fluid inlet flow rate of the fluid through the inlet opening ranges from 74 1/h to 444 l/h, preferably from 200 l/h to 350 l/h.

## Patentansprüche

1. Verfahren zum Betreiben eines passiven Zyklonseparators (3), um ein Fluid in einer Mikrogravitationsumgebung zu behandeln, um eine Flüssigphase des Fluids von einer Gasphase des Fluids zu separieren, wobei der Zyklonseparator (3) aufweist:
- einen röhrenförmigen Körper (7), der eine Längsachse (A) hat und im Innern eine Separationskammer (8) definiert, in der die Gasphase des Fluids von der Flüssigphase des Fluids separierbar ist;
- eine Einlassöffnung (10), durch die das Fluid in die Separationskammer (8) entlang einer Injektionsachse (B) injizierbar ist;
- eine Flüssigphase-Auslassöffnung (11), durch die die von der Gasphase separierte Flüssigphase in Gebrauch die Separationskammer (8) verlässt; und
eine Gasphase-Auslassöffnung (13), durch die die von der Flüssigphase separierte Gasphase die Separationskammer (8) verlässt,
wobei die Injektionsöffnung (B) hin zur Flüssigphase-Auslassöffnung (11) geneigt ist, um so einen Fluidinjektionswinkel (α) mit einer zu der Längsachse (A) orthogonalen Richtung (C) zu definieren, der ungleich Null ist;
wobei die Flüssigphase-Auslassöffnung (11) an einem ersten axialen Endabschnitt (12) des röhrenförmigen Körpers (7) angeordnet ist, und wobei die Gasphase-Auslassöffnung (13) an einem dem ersten axialen Endabschnitt (12) gegenüberliegenden zweiten axialen Endabschnitt (14) des röhrenförmigen Körpers (7) angeordnet ist;
wobei die Einlassöffnung (10) axial zwischen der Flüssigphase-Auslassöffnung (11) und der Gasphase-Auslassöffnung (13) angeordnet ist;
wobei das Verfahren den Schritt aufweist:
- Einspeisen des Fluids durch die Einlassöffnung (10) in die Separationskammer mit einer vorgegebenen Fluideinströmungsrate;
und wobei ein Verhältnis zwischen einer Fluideinströmungsrate, gemessen in l/h, zu einer axialen Distanz zwischen der Einlassöffnung (10) und der Flüssigphase-Auslassöffnung (11), gemessen in mm, zwischen 0,5 und 3, vorzugsweise zwischen 1,3 und 2,3 ist; und/oder
wobei ein Verhältnis zwischen einer Fluideinströmungsrate, gemessen in l/h, zu einer axialen Distanz zwischen der Einlassöffnung (10) und der Gasphase-Auslassöffnung (13), gemessen in mm, zwischen 0,7 und 4,4, vorzugsweise zwischen 2 und 3,5 ist.

2. Verfahren nach Anspruch 1, wobei der Fluidinjektionswinkel (α) größer als 0° und kleiner oder gleich 45°, bevorzugt größer als 0° und kleiner oder gleich 25°, stärker bevorzugt 5° ist.

3. Verfahren nach Anspruch 1 oder 2, wobei der Zyklonseparator eine Injektionsdüse (16) aufweist, die die Einlassöffnung (10) definiert;
die Injektionsdüse (16) eine Führungswand (18) aufweist, die stromab der Einlassöffnung (10) angeordnet ist und im Wesentlichen tangential zu einer Innenwand (8a) der Separationskammer (8) angeordnet ist;
wobei der Schritt Einspeisen des Fluids ausgeführt wird durch Einspeisen des Fluids tangential zu der Innenwand (8a).

4. Verfahren nach Anspruch 3, wobei die Einlassöffnung (10) einen im Wesentlichen rechtwinkligen Querschnitt hat; wobei die Injektionsdüse (16) im Innern einen Fluidkanal (20) definiert, der einen im Wesentlichen rechtwinkligen, entlang seiner Länge konstanten Querschnitt hat; und wobei ein Verhältnis einer längeren Seite des rechtwinkligen Querschnitts zu einer kürzeren Seite des rechtwinkligen Querschnitts zwischen 5 und 10, vorzugsweise 6 ist.

5. Verfahren nach einem der vorstehenden Ansprüche, wobei der röhrenförmige Körper (7) eine im Wesentlichen zylindrische Form hat, und wobei der Einlassöffnungs-Querschnitt derart konfiguriert ist, dass während des Schritts des Einspeisens des Fluids ein Verhältnis zwischen der Fluideinströmungsrate durch die Einlassöffnung, gemessen in l/h, und einem Durchmesser des röhrenförmigen Körpers, gemessen in mm, zwischen 1 und 6, vorzugsweise zwischen 2,7 und 4,7 ist.

6. Verfahren nach einem der vorstehenden Ansprüche, wobei der Einlassöffnungs-Querschnitt derart konfiguriert ist, dass während des Schritts des Einspeisens des Fluids die Fluideinströmungsrate des Fluids durch die Einlassöffnung in einem Bereich von 74 l/h bis 444 l/h, vorzugsweise von 200 l/h bis 350 l/h ist.

## Revendications

1. Procédé de fonctionnement d'un séparateur à cyclone (3) passif pour traiter un fluide dans un environnement de microgravité pour séparer une phase liquide du fluide d'une phase gazeuse du fluide, le séparateur à cyclone (3) comprenant :
- un corps tubulaire (7) présentant un axe longitudinal (A) et définissant de manière interne une chambre de séparation (8) dans laquelle la phase gazeuse dudit fluide peut être séparée de la phase liquide dudit fluide ;
- une ouverture d'entrée (10) par laquelle le fluide peut être injecté à l'intérieur de la chambre de séparation (8) le long d'un axe d'injection (B) ;
- une ouverture de sortie de phase liquide (11), par laquelle la phase liquide séparée de la phase gazeuse sort, lors de l'utilisation, de la chambre de séparation (8) ; et
- une ouverture de sortie de phase gazeuse (13), par laquelle la phase gazeuse séparée de la phase liquide sort de la chambre de séparation (8) ;
dans lequel l'axe d'injection (B) est incliné en direction de l'ouverture de sortie de phase liquide (11) de manière à définir un angle d'injection de fluide non nul (α) avec une direction (C) perpendiculaire audit axe longitudinal (A) ;
dans lequel l'ouverture de sortie de phase liquide (11) est agencée au niveau d'une première partie d'extrémité axiale (12) du corps tubulaire (7) et dans lequel l'ouverture de sortie de phase gazeuse (13) est agencée au niveau d'une deuxième partie d'extrémité axiale (14) du corps tubulaire (7) opposée à la première partie d'extrémité axiale (12) ;
dans lequel l'ouverture d'entrée (10) est interposée axialement entre l'ouverture de sortie de phase liquide (11) et l'ouverture de sortie de phase gazeuse (13) ;
le procédé comprenant l'étape de :
- acheminement du fluide par l'ouverture d'entrée (10) à l'intérieur de la chambre de séparation avec un débit d'entrée de fluide déterminé ;
et dans lequel un rapport du débit d'entrée de fluide, mesuré en l/h, à la distance axiale entre l'ouverture d'entrée (10) et l'ouverture de sortie de phase liquide (11), mesurée en mm, est compris entre 0,5 et 3, de préférence entre 1,3 et 2,3 ; et/ou
dans lequel un rapport du débit d'entrée de fluide, mesuré en l/h, à la distance axiale entre l'ouverture d'entrée (10) et l'ouverture de sortie de phase gazeuse (13), mesurée en mm, est compris entre 0,7 et 4,4, de préférence entre 2 et 3,5.

2. Procédé selon la revendication 1, dans lequel l'angle d'injection de fluide (α) est supérieur à 0° et inférieur ou égal à 45°, de préférence est supérieur à 0° et inférieur ou égal à 25°, de préférence encore est de 5°.

3. Procédé selon la revendication 1 ou 2, dans lequel le séparateur à cyclone comprend une buse d'injection (16) définissant ladite ouverture d'entrée (10) ;
la buse d'injection (16) comprend une paroi de guidage (18) agencée en aval de l'ouverture d'entrée (10) et agencée de manière sensiblement tangente à une paroi interne (8a) de la chambre de séparation (8) ;
dans lequel l'étape d'acheminement du fluide est réalisée par acheminement du fluide de manière tangentielle à ladite paroi interne (8a).

4. Procédé selon la revendication 3, dans lequel l'ouverture d'entrée (10) présente une section transversale sensiblement rectangulaire ; dans lequel ladite buse d'injection (16) définit de manière interne un passage de fluide (20) présentant une section transversale sensiblement rectangulaire constante le long de la longueur de celui-ci ; et dans lequel un rapport du côté plus long de la section transversale rectangulaire par rapport au côté plus court de la section transversale rectangulaire est compris entre 5 et 10, de préférence est 6.

5. Procédé selon l'une quelconque des revendications précédentes, dans lequel le corps tubulaire (7) présente une forme sensiblement cylindrique, et dans lequel la section transversale d'ouverture d'entrée est conçue de telle sorte que, pendant ladite étape d'acheminement du fluide, un rapport entre le débit d'entrée de fluide par l'ouverture d'entrée, mesuré en l/h, et un diamètre de corps tubulaire, mesuré en mm, est compris entre 1 et 6, de préférence entre 2,7 et 4,7.

6. Procédé selon l'une quelconque des revendications précédentes, dans lequel la section transversale d'ouverture d'entrée est conçue de telle sorte que, pendant ladite étape d'acheminement du fluide, le débit d'entrée de fluide du fluide par l'ouverture d'entrée est dans la plage de 74 l/h à 444 l/h, de préférence de 200 l/h à 350 l/h.
